# EUROPEAN PATENT APPLICATION

(11) **EP 3 683 241 A1**
(43) Date of publication of application: **22.07.2020**
(21) Application number: 19382026.3
(22) Date of filing: 17.01.2019
(51) Int. Cl.: C08B 30/14, C09J 103/02, G01N 11/08

(54) **DEVICE FOR MEASURING THE GELATINIZATION POINT OF STARCH ADHESIVES**

(71) Applicant: JP & SB Converting & Services International, S.L., 08021 Barcelona (ES)
(72) Inventor: PUIG DEU, JORGE, 08021 BARCELONA (ES)
(74) Representative: Durán-Corretjer, S.L.P.

(57) **Abstract**

Device for measuring the gelatinization point of an adhesive containing starch characterized in that it comprises:
- a container for measuring the gelatinization temperature, comprising at least one adhesive inlet to said container, and at least one adhesive outlet from the bottom of said container
- a motor-driven agitator
- controlled means for heating said container
- at least one temperature sensor for measuring the adhesive temperature in said container
- a sensor system for detecting the adhesive output, and
- a monitoring system that receives the signals from said temperature sensor and from said sensor system for detecting the adhesive output.

## Description

The present invention is in the field of corrugated cardboard and paper industry, and in particular, it relates to a device for measuring the gelatinization point of adhesives based on starch.

The corrugated cardboard industry uses paper and starch adhesives as the main raw materials in corrugating production process. The manufacturing process of corrugated cardboard is very simple but very complex at the same time. In the last decades the high demand of eco friendly containers and packaging has greatly increased world production of corrugated cardboard. Since the 1990's, corrugated cardboard manufacturing machines have evolved a lot in speed and performance in order to significantly increase production volumes of corrugated cardboard.

Starch adhesives are the only adhesives used for the manufacture of corrugated cardboard, the corrugating machines being designed for using this type of adhesive. These adhesives have a very low cost and they are prepared almost entirely in the same corrugated cardboard factory. They are water-based adhesives that are purchased as a powder and are formulated in continuous production to be used the same day, because they loose their characteristics very quickly, so it is not advisable to store them more than 24 - 48 hours.

The starch based adhesives can be formulated with native or modified starches. The starches can be obtained from several sources, for example from cereals or tubers mainly. The most commonly used starches are corn, wheat, tapioca, potato or pea starches. Their use depends on the geographical location. In Europe and North America, the most commonly used are corn and wheat, while in Asia and South America, tapioca is preferred to corn starches. They can also be prepared with other types of starches for which there is no a high production capacity, or that have a higher cost, such as potato and pea starches.

Starch adhesives are formulated and manufactured according to known methods, for example, the Stein Hall, Minocar, non Carrier, and OBM Ready Mix systems and other manufacturing methods that rely on virtually the same production method. All these starch adhesives are formulated by adding chemicals such as caustic soda (NaOH) and borates such a borax or boric acid, or liquid based products containing boron. Caustic soda can be in solid or liquid form in different concentrations of the Baume scale. These chemical products have a specific technical function with the aim of achieving optimal adhesion during the corrugation process.

Depending on the type of starch and the preparation process, these adhesives are formulated with a variable content of starch solids, usually between 20% and 30%.

Moreover, several parameters have to be taken into account for the optimum performance of the adhesive in the corrugating machine, such as the application method, cooling of the adhesive application system, the heat transfer system on the table, pressures, speed, quality of paper, the paper grammage and temperature, or the environmental conditions of the corrugation process and the storage room for the starch adhesive and the paper. Among others, which are very important parameters when making a correct adjustment of the adhesive formulation.

In a starch adhesive, it is very important to balance the amounts of chemicals that are added to the starch, depending on their type and nature. In addition, it is necessary to control viscosity, pH and the gelatinization point, also called "gel point".

Gelatinization is known as the process where the granules of starch, which are insoluble in cold water because their highly organized structure, are heated (60 °C-70 °C) and a slow water absorption process begins in the amorphous intermicellary zones that are less organized and more accessible. When temperature increases, more water is retained and the granule begins to swell and increase in volume. This phenomenon can be observed under a microscope. Upon a certain temperature is reached, the granules reach a maximum volume and lose both their X-ray diffraction pattern and their birefringence. The temperature range in which all granules are swollen is known as the gelatinization range and it is characteristic of each starch variety that is being used. Together with the swelling of the granules, an extraction of the amylose also occurs. This released amylose remains in colloidal dispersion where intact granules are in suspension. If heating of the swollen granules is continued, they will break partially and amylose and amylopectin will disperse in the solution. At the end of this process a paste or gel is generated in which there are highly hydrated amylose chains that surround the aggregates, also hydrated, of the remaining granules. It is evident that in the manufacturing process of the starch adhesive for corrugated cardboard the gelatinization point should not be reached because the adhesive would curdle in the manufacturing tank.

The starch adhesive can be prepared manually, semiautomatically or fully automatically. It is manufactured in facilities called glue kitchens. The glue kitchens have one or more tanks for manufacturing the adhesive and storage tanks that have an agitation system to keep the adhesive in suspension until it is used in the corrugating machine. The tanks for the adhesive manufacture have a weight control system. Normally, the addition of chemicals that are part of the adhesive formulation can be done by direct weighing in the manufacturing tank or by pre-weighing.

Whether the installation is manual, semi-automatic or even automatic, it is necessary to control the adhesive viscosity by means of a manual viscometer. Most of the automatic kitchens already have an automatic viscometer system with a sensor inside the adhesive manufacturing tank, which usually has a considerable margin of error due to the strong agitation, with more than 1.000 - 1.500 rev/min of the glue inside the tank.

One of the main problems of starch adhesives in corrugation machines is the unawareness of the importance of the gelatinization point of a starch adhesive in a corrugated cardboard manufacturing process. The lack of automatic methods limits the possibility of being able to establish a quality control in the process.

At present there is no such a device that allows to automatically measure and control the gelatinization point of a starch adhesive in line or in the manufacturing process. Therefore, there is a need to provide a device both in line and in process to measure and control this parameter, which is essential in the manufacturing process of corrugated cardboard.

Therefore, in a first aspect the present invention discloses a device for automatically measuring the gelatinization point, which also allows to measure the starch adhesive viscosity, and optionally the pH value of any aqueous based product with native starch in suspension. Said device can be used in a container of the adhesive manufacturing process, in the storage containers or in line in the adhesive preparation circuits. It is also possible to use it manually, for example, as a device for quality control in laboratories or processes.

The gelatinization point of a starch adhesive for corrugated cardboard is the key for having a correct adhesion, and it is adjusted according to the starch type and nature, as well as according to the chemicals added in the adhesive formulation. The temperature of the gelatinization point is determined according to the speed and temperatures of the process, the thermal transfer of the papers in the corrugating machine, and paper quality and grammage having all these parameters their influence on the adhesion quality.

The device of the present invention has versatility and a reduced size, which allows monitoring in any other point of the process, for example in the adhesive pipes or circuits that run to the corrugating machine, or when returning by recirculation to the storage container, it can also be used in the adhesive application systems by connecting it to the adhesive application trays provided in the application rollers. Another option is to use it as manual equipment that would allow its use as a laboratory control device for determining the gelatinization point in any place that requires such determination and/or control.

In a first aspect, the present invention discloses a device for measuring the gelatinization point of an adhesive containing starch characterized in that it comprises:
- a container for measuring the gelatinization temperature, comprising at least one adhesive inlet to the container, and at least one adhesive outlet from the bottom of said container
- a motor-driven agitator
- controlled means for heating said container
- at least one temperature sensor for measuring the adhesive temperature in the container
- a sensor system for detecting the adhesive output, and
- a monitoring system that receives signals from the temperature sensor and the sensor system for detecting the adhesive output.

Preferably, said device further comprises a viscometer attached to its upper part. More preferably, said viscometer comprises a reservoir with at least one adhesive inlet and at least one adhesive outlet. Also preferably, said viscometer comprises weight sensors inside said reservoir and a pH meter. In one embodiment, a valve monitored by a control device is provided between the viscometer and the container for measuring the gelatinization point. Preferably, the viscometer and the container for measuring the gelatinization point are connected through a tube of an elastomeric material, which allows its disassembly more easly.

Preferably, said device for measuring the gelatinization point comprises load sensors for weight monitoring in the measuring container.

Also preferably, the adhesive input of the viscometer comprises a filter to prevent the entry of lumps. In addition, preferably the bottom of the viscometer is of conical shape to assist the exit of the adhesive towards the device for measuring the gelatinization point.

Preferably, said adhesive and water inlets, and the adhesive outlet of the viscometer and of the device for measuring the gelatinization point comprise at least one automatic valve.

Preferably, the device of the present invention may further comprise an outer casing, which may comprise an access door to the interior elements in which an interface screen with the user may be installed. Said outer casing can be rectangular, cylindrical, square, triangular, or of any shape known to a person skilled in the art.

Preferably, the device of the present invention can be made of any material known to a person skilled in the art, such as steel, stainless steel, plastic, glass, among others. More preferably, said device is made of stainless steel.

Furthermore, preferably, the device of the present invention may comprise support means, which will allow it to be attached in line to the containers, reactors or pipes used in the adhesive preparation process. Also preferably, the device of the present invention may comprise a support for it to be used as desktop control equipment in a laboratory.

Also preferably, the heating means can be any of the means known to a person skilled in the art, for example, electrical resistances, water bath, heating jacket or silicone belt, among others.

As it is known to the skilled person, the data generated by the device of the present invention can be stored in a memory, for example on an SD card, or means can also be provided to send the data wirelessly to a remote server.

The present invention is described below based on figures, by way of explanatory but not limiting examples of different embodiments of the device of the present invention, in which:
Figure 1 shows a front view of a viscometer cross section to be attached to the device of the present invention for measuring the gelatinization point.
Figure 2 shows a front view of a cross section of the device of the present invention for measuring the gelatinization point.
Figure 3 shows a front view of a cross section of the device of the present invention for measuring the gelatinization point coupled to the viscometer.
Figure 4 shows a front view of the device of the present invention inside the casing, with the door containing the monitoring screen open.
Figure 5 shows a front view of the device of the present invention inside the casing, with the door containing the monitoring screen closed.

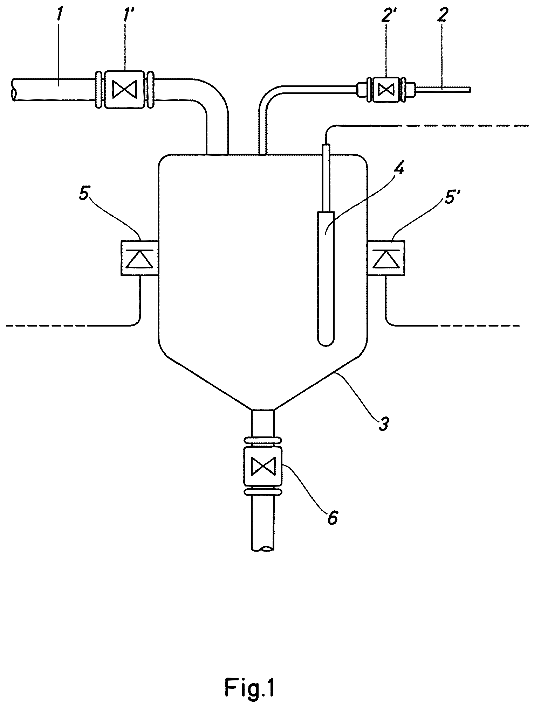

As shown in Figure 1, in the upper part of the device for measuring the gelatinization point of a starch adhesive of the present invention, it is possible to have a viscometer -3- which has an adhesive inlet -1- and a water inlet -2- with an automatic valve -2'-. This adhesive inlet -1- also has an automatic valve -1'- that closes and opens to let the adhesive pass through. In addition, the viscometer -3-, which has a conical bottom, has a pH meter -4- and load cells -5- and -5'- for weight control inside of said viscometer -3-. These load cells -5- and -5'- send the weight information to the valve -1'- so that it closes once the desired adhesive weight has been reached. In the lower part of the viscometer -3- there is an automatic valve -6- for the adhesive discharge towards the device for measuring the gelatinization point that is attached at the bottom part of the viscometer -3. That is, once the desired weight has been reached in the viscometer -3-, the valve -6- is opened so that the adhesive passes through a nozzle, which is perforated according to several calibrations, that can be threaded into place and that controls the viscosity value by the falling time while the adhesive passes to the gel point measuring device. Once the upper container has been emptied, the valve -2- is opened to let water pass through and a cleaning sequence is carried out.

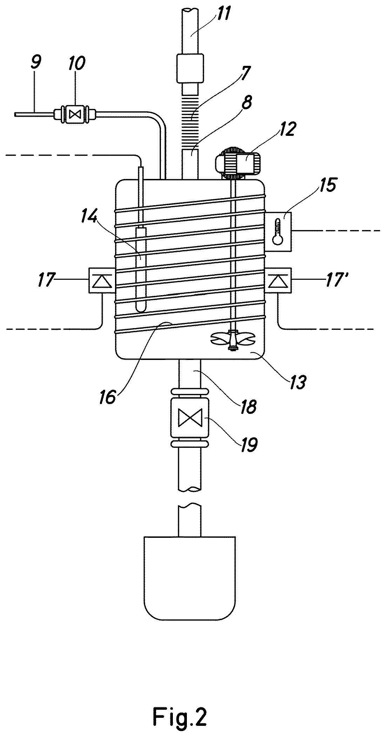

Figure 2 shows the device for measuring the gelatinization point of the present invention, which is connected to the viscometer (shown in Figure 1) through the adhesive outlet -11- of the viscometer by a flexo -7- of an elastomeric material, which allows disassembling the viscometer from the device of the present invention, an adhesive input -8- to the device, a water inlet -9-, in which circuit an automatic water inlet valve -10-, an agitator -12- to stir the adhesive inside the container -13-, a temperature probe -14-, a thermostat -15- connected to an electrical resistance -16-, load cells -17- and -17'- for weight monitoring inside the inner reservoir, and an adhesive outlet -18- comprising an automatic discharge valve -19- are provided.

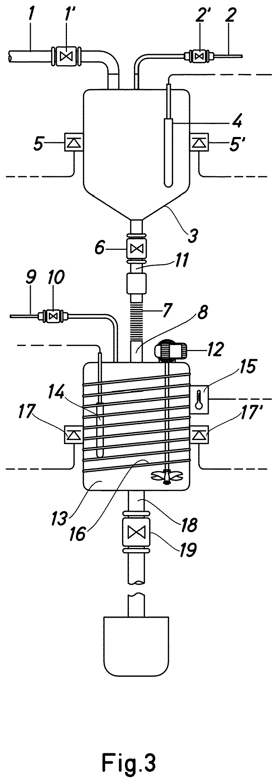

Figure 3 shows a front view of a cross section of one embodiment of the device for measuring the gelatinization point of the present invention, in which the viscometer is attached to the lower part by an elastomeric flexo -7-.

When the device of the present invention is coupled to the viscometer -3-, the process begins with the opening of the valve -1'- placed in the adhesive inlet -1-, once the viscometer is filled with a predetermined quantity of adhesive, which is controlled by the load cells -5- and -5'-, the valve -6- is opened automatically to allow the adhesive to pass to the device for measuring the gel point located at the bottom. The emptying time of the viscometer -3- is controlled by an automatic chronometer, and when the weight reaches the value of 0, the adhesive viscosity can be determined as a function of that emptying time. In addition, when the weight reaches a 0 value in the viscometer -3-, the valve -6- is closed and in the measuring device of the gelatinization point of figure 2, the agitator -12- begins to agitate the adhesive and the electrical resistance -16- controlled by the thermostat -15- begins to heat it. The temperature will begin to increase up to a fixed value (set point), which is lower than the point of gelatinization, in which the valve -19- of the adhesive outlet -18- is opened minimally, so that the adhesive weight inside the measuring device, controlled by the load cells -17- and -17'-, begins to decrease. When the adhesive stops coming out for, for example, 5 seconds, this is indicative that the adhesive has reached the gelatinization point, ceasing to flow and remaining gelatinized. In addition, this gelatinization point can also be determined by a decrease of 1 °C or 2 °C in the adhesive temperature, which usually occurs when the gelatinization point is reached, and also by a speed decrease in the agitator motor -12- when the adhesive becomes more viscous. Therefore, with the device of the present invention it is possible to combine these three ways of measuring the gelatinization point to ensure a great accuracy. At the end of the process, the valve -19- of the adhesive outlet -18- opens completely to let out all the adhesive, and later one or several washing cycles can be carried out automatically opening the valve -10- of the water inlet -9-.

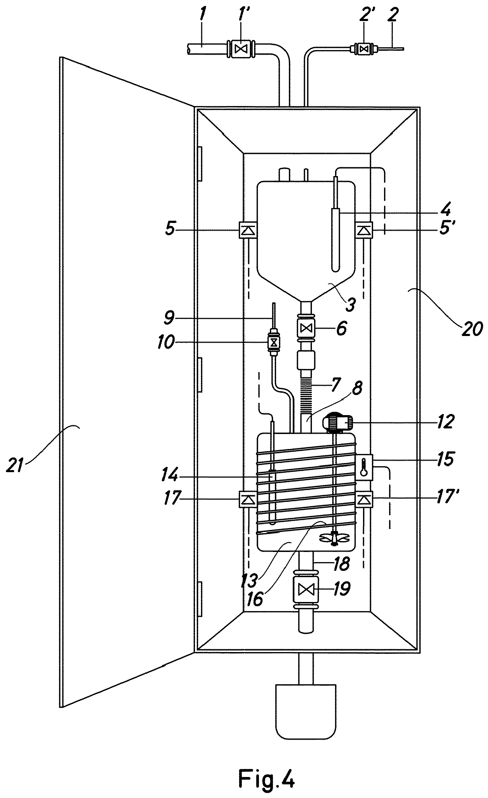

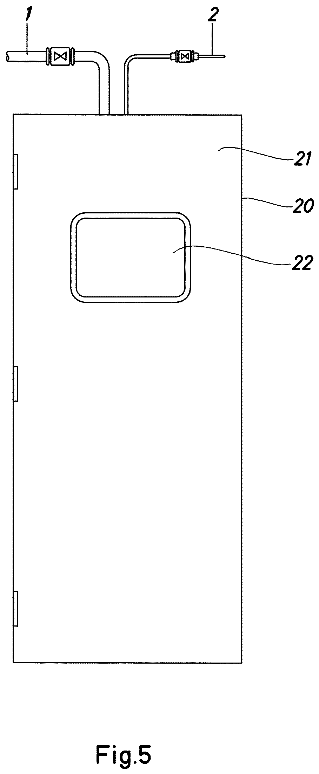

Figure 4 shows a front view of the device of the present invention inside the casing -20- with an open door -21-. As shown in Figure 5, said door -21- in the casing -20- has an user interface screen -22-.

## Claims

1. Device for measuring the gelatinization point of an adhesive containing starch **characterized in that** it comprises:
- a container for measuring the gelatinization temperature, comprising at least one adhesive inlet to said container, and at least one adhesive outlet from the bottom of said container
- a motor-driven agitator
- controlled means for heating said container
- at least one temperature sensor for measuring the adhesive temperature in said container
- a sensor system for detecting the adhesive output, and
- a monitoring system that receives the signals from said temperature sensor and from said sensor system for detecting the adhesive output.

2. Device, according to claim 1, **characterized in that** it further comprises a viscometer attached to its upper part.

3. Device, according to claim 2, **characterized in that** said viscometer comprises a container with at least one adhesive inlet, at least one adhesive outlet, weight sensors and a pH meter.

4. Device, according to any of claims 2 to 3, **characterized in that** said viscometer and said device for measuring the gelatinization point are coupled by a tube of an elastomeric material.

5. Device, according to any of claims 2 to 4, **characterized in that** the bottom of the viscometer is of conical shape.

6. Device, according to any of the preceding claims, **characterized in that** said adhesive and water inlets, the adhesive outlet of the viscometer and the measuring device of the gelatinization point comprise at least one automatic valve.

7. Device, according to any of the preceding claims, **characterized in that** said device further comprises an outer casing.

8. Device, according to claim 7, **characterized in that** said outer casing comprises an access door to the interior elements.

9. Device, according to claim 7 or 8, **characterized in that** said door comprises an user interface screen.

10. Device, according to any of the preceding claims, **characterized in that** it is made of stainless steel.

11. Device, according to any of the preceding claims, **characterized in that** it further comprises support means that allow coupling in line to the container, reactors or pipes used in the process of the adhesive preparation, or to be used as a desktop control equipment in a laboratory.

12. Device, according to any of the preceding claims, **characterized in that** it comprises storage means for the data generated and/or means for sending said data wirelessly to a remote server.
